# EUROPEAN PATENT SPECIFICATION

(11) **EP 3 647 194 B1**
(45) Date of publication and mention of the grant of the patent: **10.04.2024**
(21) Application number: 19205879.0
(22) Date of filing: 29.10.2019
(51) Int. Cl.: B64D 11/00, B64D 11/06, G06F 3/01, H04N 9/31

(54) **SYSTEM AND METHOD FOR PROVIDING PASSENGER INTERFACES**
SYSTEM UND VERFAHREN ZUR BEREITSTELLUNG VON FAHRGASTSCHNITTSTELLEN
SYSTÈME ET PROCÉDÉ POUR FOURNIR DES INTERFACES DE PASSAGERS

(30) Priority: 30.10.2018 US 201862752475 P
(43) Date of publication of application: 06.05.2020
(73) Proprietor: Bombardier Inc., Dorval QC H4S1Y9 (CA)
(72) Inventor: Beaudin, Nikolas, Montreal, Quebec H1A 5P2 (CA); Bang, Seung Joon, Laval, Quebec H7P 0C3 (CA); Finkhelstein, Thomas, Pierrefonds, Quebec, H8Z 3J6 (CA); Gagnon-Seguin, Louis, Montreal, Quebec H3X 2R9 (CA); Masaud, Omar, Ottawa, Ontario K1S 5B6 (CA); Ahmadi, Mojtaba, Ottawa, Ontario K1S 5B6 (CA); O'Neill, Darren, Kanata, Ontario K2M 2L3 (CA); Trudel, Chantal Marie-Josée, Ottawa, Ontario K1H 5V6 (CA)
(74) Representative: HGF

(56) References cited:
- US-A1- 2014 192 268
- US-A1- 2015 062 168
- US-A1- 2016 274 674
- US-A1- 2017 210 472
- US-A1- 2018 136 733
- US-B1- 9 092 136

## Description

### FIELD OF TECHNOLOGY

The present technology relates to systems and methods of providing interfaces in a vehicle, especially an aircraft. More specifically, the present technology is directed to the providing projected interfaces and sensing passenger interaction with those projected interfaces.

### BACKGROUND

Passenger transportation, including aircraft for example, include an ever increasing variety of features for controlling passenger comfort and experience, as well as information and entertainment media. For example, passengers often have access to cabin features such as light and air flow, internet accessing interfaces such as browsers on computer or touch screens, and visual media such a movies or television shows.

The physical structures for passenger interaction with controls and media, such as buttons or touch screens, tend to have a limited life span and a high replacement cost. Passenger interactions tend to cause wear and tear damage to these apparatuses, necessitating replacement over time. Further, style changes and technological advances can lead to even faster replacement of these physical structures, in order to satisfy passengers' desire for up to date technology.

The increasing numbers of interactive media structures lead not only to increased costs but also to a loss of space around the passenger. Vehicle cabins can become cluttered by the many buttons, touch screens etc. Further, each additional features can further necessitate buttons, controls, etc. in order for the passenger to switch between all of the different features.

Consequently, there is a desire for a configuration for a technology which provides interfaces with which passengers can interact, but without at least some of the above drawbacks. Various prior art proposals are described in the following references. US2016274674A1 describes an integrated keyboard tray assembly also including a passenger seat. A sensor adjacent the tray table is configured to detect a user interaction at the top surface of the tray table when the tray table is in the open position. US2014192268A1 describes a personal interactive overhead projection system, which projects video onto a passive substrate such as a tray table or a dedicated video projection screen attached to the seat. The passenger sitting in the seat controls the projected video by positioning his or her finger or making hand gestures proximate the passive substrate. US2015062168A1 describes a system for providing augmented reality-based directions based on receiving a voice input based on verbal cues provided by vehicle occupant. The system also includes receiving a gesture input and a gaze input based on cues provided by the occupants and operates to display augmented reality graphical elements on a heads-up display. US2018136733A1 describes a passenger service unit for an aircraft cabin. A camera is configured to acquire an image of passenger hand signals or gestures. A control module is configured to control cabin systems based on the gesture data. US2017210472A1 describes a projection system for use with an aircraft seat. The projector system is held in a cassette frame in a cavity. The projector system is configured such that an image is projected by the projector system from the cavity through a front panel. The cassette frame is sized and configured to be received and releasably held in an aircraft seatback. US9092136B1 describes a projected button display system, including a detector system, a projector system, and a controller. The system projects a user interface on a ledge of an aircraft cabin.

### SUMMARY

It is an object of the present technology to ameliorate at least some of the inconveniences present in the prior art.

According to an aspect of the present technology, there is provided an aircraft comprising a passenger cabin with a plurality of seats; a ledge extending along a cabin sidewall disposed next to one side of said seats; a table top associated with at least one of said seats; and a system for providing a passenger interface for a passenger in a seat. The system includes at least one sensor adapted to sense at least one of: a position of at least one hand of the passenger, a configuration of the at least one hand of the passenger, and a direction of movement of the at least one hand of the passenger, the at least one sensor being adapted to generate a signal representative of the at least one of the position of the at least one hand of the passenger, the configuration of the at least one hand of the passenger, and the direction of movement of the at least one hand of the passenger; a controller communicatively connected to the at least one sensor for receiving at least the signal therefrom, the controller being communicatively connected to at least one passenger controllable feature, the controller being adapted to control the at least one passenger controllable feature based on the signal representative of the at least one of the position of the at least one hand of the passenger, the configuration of the at least one hand of the passenger, and the direction of movement of the at least one hand of the passenger; and a projector communicatively connected to the controller, the projector being adapted to project a passenger interface onto a predetermined surface, placement of the projected passenger interface being determined by the controller based at least on the signal representative of the at least one of the position of the at least one hand of the passenger, the configuration of the at least one hand of the passenger, and the direction of movement of the at least one hand of the passenger, characterized in that the projector is a first projector; the predetermined surface is a first predetermined surface; and the system further comprises; a second projector communicatively connected to the controller, the second projector being adapted for projecting at least one media display onto a second predetermined surface, the first predetermined surface is the ledge generally adjacent to the seats and the second predetermined surface is the table top, wherein at least a portion of the second predetermined surface is selectively moveable between at least a horizontal position and a tilted position; and
the second projector is adapted to project the at least one media display onto the portion when the portion is arranged in the horizontal position and when the portion is arranged in the tilted position; and
the at least one sensor is further adapted to sense a position of the second predetermined surface, and upon sensing the position of the second predetermined surface, the sensor generates a signal indicative of the position which is then sent to the second projector to adapt the at least one media display such that the at least one media display is correctly projected onto the second predetermined surface.

In some embodiments, the at least one sensor is adapted to determine an intended interaction with the passenger interface by the passenger based on a placement of the at least one hand of the passenger on the predetermined surface.

In some embodiments, the at least one sensor is adapted to determine an intended interaction with the passenger interface by the passenger based on movement of the at least one hand of the passenger between the projector and the predetermined surface.

In some embodiments, the at least one passenger controllable feature includes at least one of: an overhead light; an air supply; a sound system with controllable volume; and a window shade system for selectively closing and opening a window shade.

In some embodiments, the second predetermined surface is selectively moveable between at least a deployed position and a stored position, the second projector being adapted to project the at least one media display onto the second predetermined surface only when the second predetermined surface is arranged in the deployed position.

In some embodiments, the system further includes a third projector for projecting a visual media onto a wall surface disposed generally opposite the seat, the third projector being communicatively connected to the controller.

In some embodiments, the visual media is at least a portion of the at least one media display projected by the second projector.

In some embodiments, the system further includes at least one seat sensor communicative connected to the controller, the at least one seat sensor being adapted for determining at least one of: a translational position of the seat; a recline angle of the seat; and a presence of the passenger in the seat.

In some embodiments, the system further includes at least one passenger sensor communicatively connected to the controller, the passenger sensor being adapted to determine at least one of: a position of a head of the passenger; a position of a body of the passenger; and a change in position of at least one of the head of the passenger and the body of the passenger.

In some embodiments, the passenger interface projects buttons for controlling at least one of: a passenger controllable feature; and an additional projector for projecting at least one media display onto a surface near the seat.
According to another aspect of the present technology, there is provided a method for providing a passenger interface to a passenger in a seat, in an aircraft, the aircraft comprising; a passenger cabin with a plurality of seats; a ledge extending along a cabin sidewall disposed next to one side of said seats; a table top associated with at least one of said seats. The method includes receiving, by a controller from at least one sensor, a first signal indicative of at least one of: a position of the hand of the passenger, and a position of an arm of the passenger; projecting, by a projector, a passenger interface onto a predetermined surface, a location of the passenger interface on the predetermined surface being based on the first signal; receiving, by the controller from the at least one sensor, a second signal indicative of at least one of a position of the hand of the passenger with respect to the passenger interface, a configuration of the hand of the passenger with respect to the passenger interface, and a direction of movement of the hand of the passenger with respect to the passenger interface; and adjusting, by the controller, based on the second signal, at least one of: a passenger controllable feature, and projection of at least one media display by a second projector communicatively connected to the controller, characterized in that the predetermined surface is a first predetermined surface, the second projector being adapted for projecting at least one media display onto a second predetermined surface, the first predetermined surface being the ledge generally adjacent to the seats; and the second predetermined surface being the table top, wherein at least a portion of the second predetermined surface is selectively moveable between at least a horizontal position and a tilted position; and the second projector is adapted to project the at least one media display onto the portion when the portion is arranged in the horizontal position and when the portion is arranged in the tilted position; and
the at least one sensor is further adapted to sense a position of the second predetermined surface, and upon sensing the position of the second predetermined surface, the sensor generates a signal indicative of the position which is then sent to the second projector to adapt the at least one media display such that the at least one media display is correctly projected onto the second predetermined surface.

Embodiments of the present technology each have at least one of the above-mentioned object and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of embodiments of the present technology will become apparent from the following description and the accompanying drawings.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 is a top plan view of an aircraft;
Figure 2 is a side view of a portion of a passenger cabin of the aircraft of Figure 1;
Figure 3 is a cross-sectional view of the passenger cabin of Figure 2;
Figure 4 is a partial cut-away view of the passenger cabin of Figure 2;
Figure 5 is a schematic diagram of a system for providing a passenger interface in the passenger cabin of Figure 2, according to one embodiment of the present technology;
Figure 6 is a close-up view of portions of the passenger cabin of Figure 2, with a table in a horizontal position;
Figure 7 is the close-up view of the portions of the passenger cabin of Figure 6, with the table in a tilted position;
Figure 8 is a schematic diagram of a system for providing a passenger interface in the passenger cabin of Figure 2, according to another embodiment of the present technology;
Figure 9 is the cross-sectional view of the passenger cabin of Figure 2, with the system of Figure 8; and
Figure 10 is a flow chart of a method of providing a passenger interface according to the present technology.

It should be noted that the Figures are not drawn to scale, unless otherwise noted.

### DETAILED DESCRIPTION

The present technology will now be described in connection with one or more embodiments. The discussion of any one particular embodiment or associated feature is not intended to be limiting of the present invention. To the contrary, the discussion of particular embodiments and features is intended to illustrate the breadth and scope of the present invention. There are numerous variations and equivalents that will be made apparent from the discussion that follows. Those variations and equivalents are intended to be encompassed by the scope of the present invention as if described herein.

With respect to various features that are discussed in connection with specific embodiments, it is noted that the features are not intended to be exclusive of one another. To the contrary, as should be apparent to those skilled in the art, several of the features may be combinable in arrangements that differ from the specific embodiments described below. Those combinations are contemplated to fall within the scope of the present invention.

The present technology will be described with respect to aircraft, but it is contemplated that all or some of the aspects of the technology could be applied to other passenger vehicles, including but not limited to: trains, automobiles, and ships.

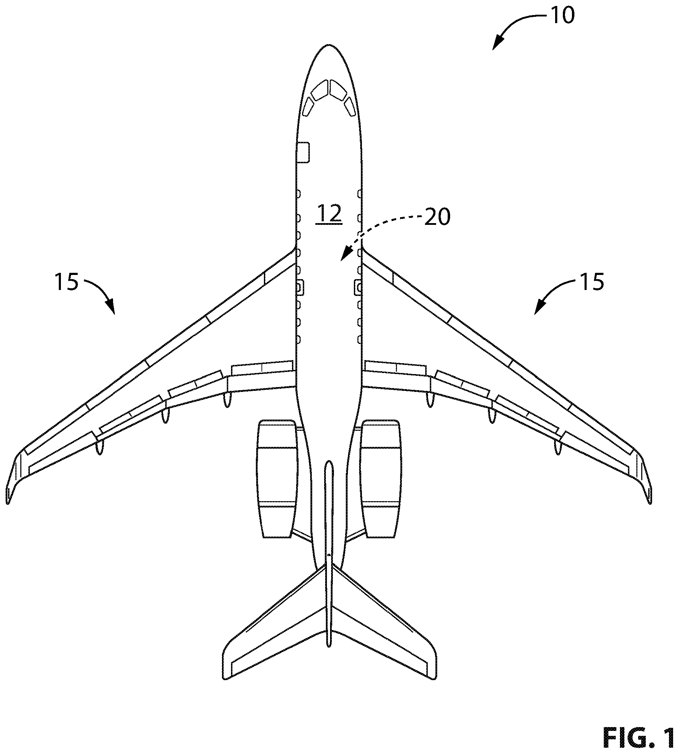

Figure 1 shows a top view of a fixed-wing jet aircraft 10 according to the present technology. The aircraft 10 includes a fuselage 12 (the body of the aircraft 10). Connected to the fuselage 12 are two oppositely disposed wing assemblies 15, also referred to herein as wings 15. The wings 15 produce lift and therefore flight of the aircraft 10 during operation. The illustrated aircraft 10 is simply an example of an aircraft implementing an embodiment of the present technology; it is not meant to be limiting.

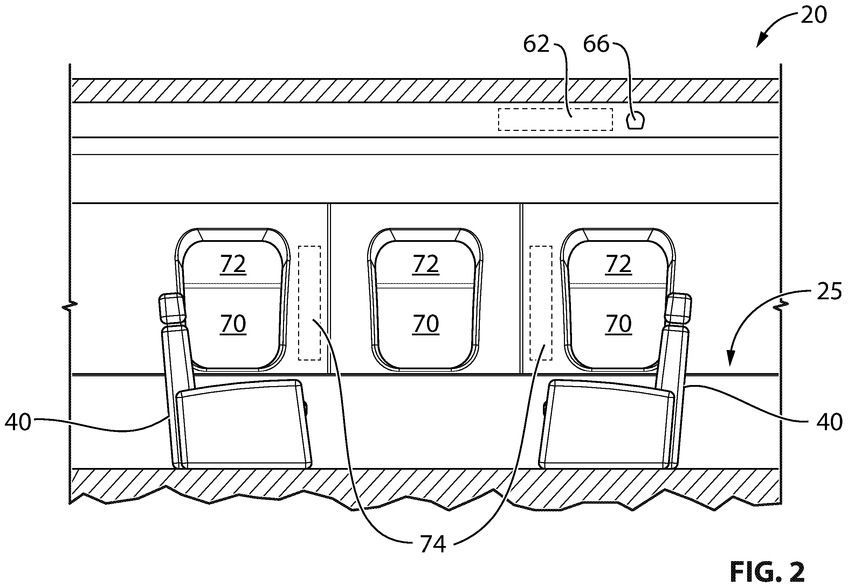

Within the fuselage 12 is a passenger cabin 20, portions of which are illustrated in Figures 2 to 4. There are a plurality of passenger seats 40 in the cabin 20. The number and relative orientations of the seats 40 depend on the specific embodiment, and are not limited to the arrangement illustrated in the Figures. The fuselage 12 includes a plurality of windows 70 extending through to the passenger cabin 20. The cabin 20 could include more or fewer windows 70 than is illustrated in the Figures, depending on the specific embodiment of the aircraft 10.

The passenger cabin 20 includes a side ledge 25 that extends along a cabin side wall 22, disposed next to one side of each seat 40. Depending on the specific embodiment, the side ledge 25 could extend along only portions of the cabin 20. It is also contemplated that the side ledge 25 could extend along all or portions of only one side wall 22, depending on the specific embodiment of the aircraft 10.

The passenger cabin 20 further includes a table 30, extending outward from the wall 22. The table 30 is disposed between two facing seats 40, but it is contemplated that each seat 40 could have its own table 30. It is also contemplated that the cabin 20 could include more or fewer tables 30. In some embodiments, the table 30 could be connected to the floor of the cabin 20, rather than extending from the wall 22. In some other embodiments, the table 30 could be movably connected to its corresponding seat 40. The size, style, and form of the table 30 is not meant to be limited by the table 30 illustrated in the Figures.

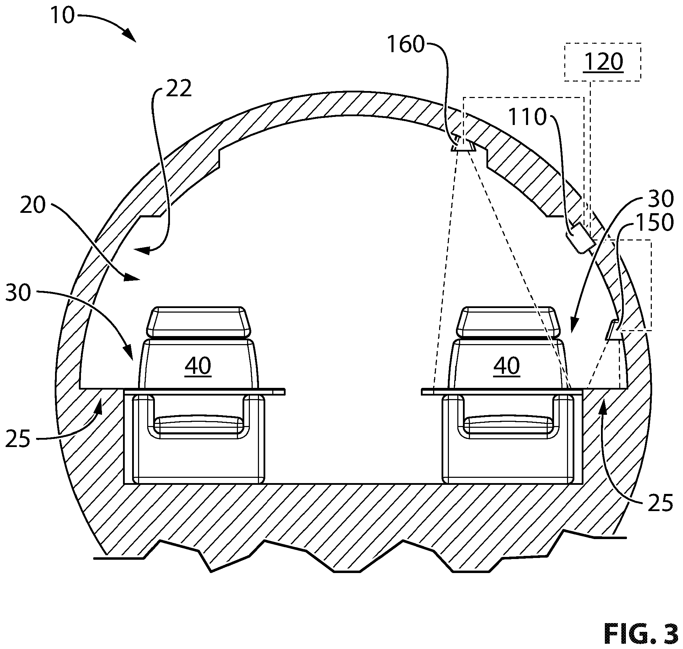

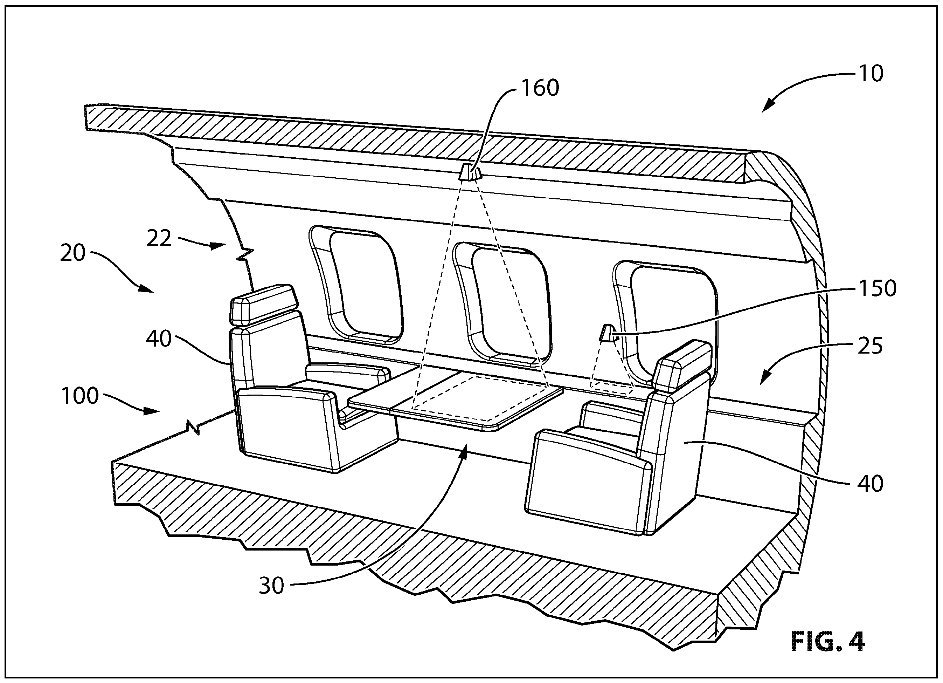

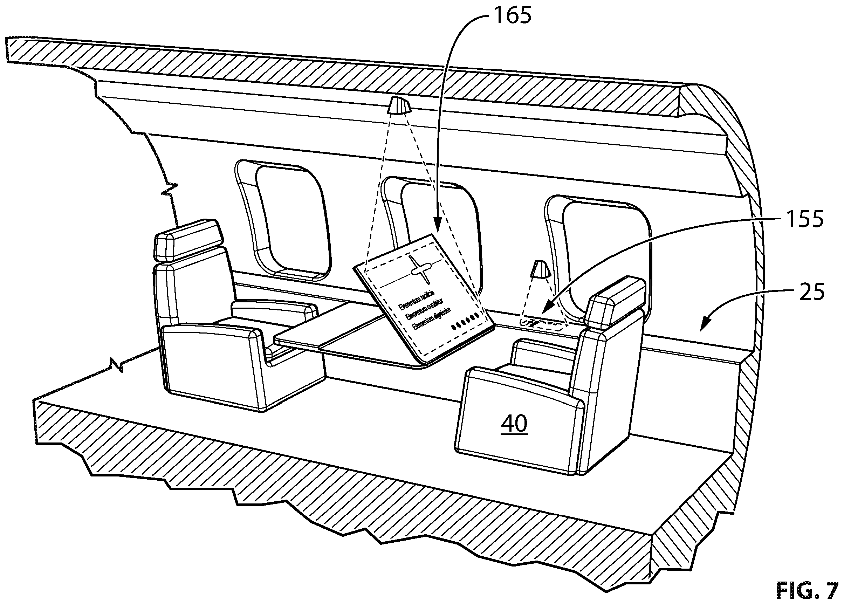

The table 30 is selectively deployable, such that the table 30 can be stored away when desired by the passenger. In Figure 2, the table 30 has been put away, arranged in a stored position. In Figures 3 and 4, the table 30 is illustrated in a deployed position, out and ready for use by the passenger. The table 30 includes a tiltable portion 32, shown in a tilted position in Figure 7. The tiltable portion 32 of the table 30, and use thereof, will be described in more detail below.

The passenger cabin 20 further includes several passenger controllable features, These features may also be collectively referred to as "comfort parameters" or "passenger services" with respect to the present technology. These features have been illustrated only in Figure 2 for clarity of the Figures; it is contemplated that the features are equally present in the remaining Figures but are not shown to avoid overcrowding of the illustrations. Control of these features will be described in more detail below with reference to a system 100. The passenger controllable features described herein are non-limiting examples of such features. Inclusion and control of different, alternative, or additional features is contemplated.

As illustrated in Figure 2, each window 70 has a passenger controllable window shade 72. The windows 70 are positioned adjacent and between the seats 40, as might be expected for a typical layout of a cabin 20 for an aircraft. The cabin 20 could include more or less windows 70 than illustrated, depending on the embodiment of the cabin 20 or the aircraft 10. The window shade 72 may be a physical shade (*i.e.*, a light-impermeable flexible material) that blocks the transmission of light through the window 70. Alternatively, the window shade 72 may be an electrochromic material (*i.e.*, an electrochromic) film that alters the transmission of light through the window 70 by responding to an electrical signal applied thereto. Other types of window shades 72 also may be employed without departing from the scope of the present technology.

As also illustrated in Figure 2, the cabin 20 includes one or more passenger controllable overhead light fixtures 62 disposed generally above at least one of the seats 40. The light fixtures 62 are contemplated to provide specific, task lighting (including light for reading) for a passenger in the seat 40. The overhead light fixtures 62 are contemplated to be LEDs, aspects of which may be adjusted by the passenger, such as its intensity and color, as will be described in more detail below.

As is also illustrated in Figure 2, the cabin 20 includes a passenger controllable air nozzle 66 to direct an air flow toward its corresponding seat 40. While only one air nozzle 66 is illustrated, it is contemplated that one or more air nozzles 66 could be included for each seat 40 in the cabin 20. In connection with the air nozzle 66, its air flow direction, and its air flow rate, it is noted that each of these variables concern what is more generally referred to as the "air supply" provided within the cabin 20 of the aircraft 10. To avoid limiting the present technology solely to air provided via an air nozzle 66, the term "air supply" is used herein to encompass any structure, hardware, and/or software that may be employed to supply air within the cabin 20 of the aircraft 10. The air nozzle 66, therefore, represents one specific embodiment by which air may be supplied within the cabin 20 of the aircraft 10.

As is also illustrated in Figure 2, the cabin 20 includes a passenger controllable sound system 74, embodied in the present non-limiting description as a speaker 74 disposed near its corresponding seat 40. The speakers 74 could be connected to a visual media system (described in more detail below), for example for providing sound for a movie. It is contemplated that the passenger controllable sound system 74 could take the form of a headphone jack for connecting headphones for listening to movie sounds, music, etc. It is also contemplated that the passenger controllable sound system 74 could include multiple speakers and/or speakers in conjunction with one or more headphone jacks.

In accordance with the present technology, the passenger cabin 20 includes a system 100 for providing one or more passenger interfaces for a passenger in one of the seats 40 and for controlling at least some of the passenger controllable features described above. In the present description, the system 100 will be described for only one of the seats 40, but it is contemplated that the cabin 20 could include multiple embodiments of the system 100. For example, in some embodiments of the aircraft 10, there could be included one system 100 for each passenger seat. Some different embodiments, it is also contemplated that one system 100 could provide interfaces for multiple seats 40.

The system 100 includes a controller 120 for controlling and managing different portions of the system 100. The controller 120 is generally any computer-implemented device capable of performing the computational tasks descried herein. In some embodiments, the controller 120 could be embodied as a processor within a computer system of the aircraft 10. It is contemplated that the controller 120 could be integral with other control systems of the aircraft 10. It is also contemplated that the controller 120 could be a stand-along computational device disposed in the infrastructure of the aircraft 10.

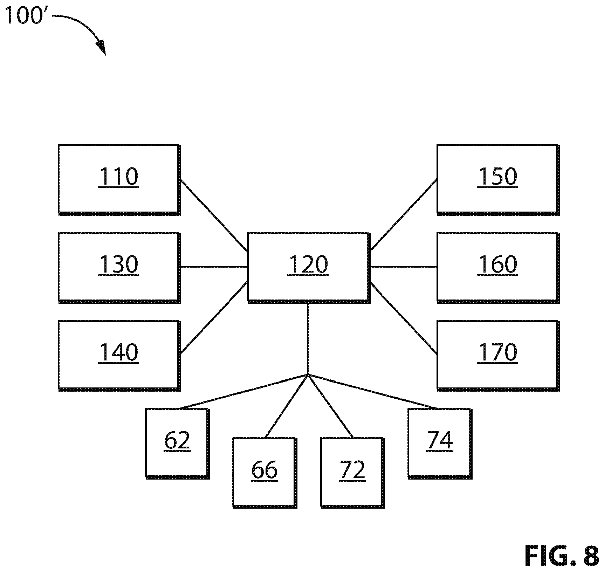

The system 100 also includes a sensor 110, specifically a gesture control sensor 110, communicatively connected to the controller 120. The sensor 110 senses at least one of a position, direction of movement, and a configuration of one or more passenger hands. In some embodiments, the sensor 110 includes a camera and image treatment system to determine hand position, movement, and gestures. By sensing the passenger's hand or hands, the sensor 110 detects passenger interaction with passenger interfaces in the cabin 20, as will be described in more detail below. In some embodiments, it is contemplated that the sensor 110 could further sense a head position of the passenger, a body position of the passenger, and/or a change in the head or body position. It is also contemplated that the system 100 could include a separate sensor for sensing the head and/or body position of the passenger. As is mentioned later, it is further contemplated that one or more of the seats 40 could include a seat position sensor 140 (see for example Figure 8 and related description below).

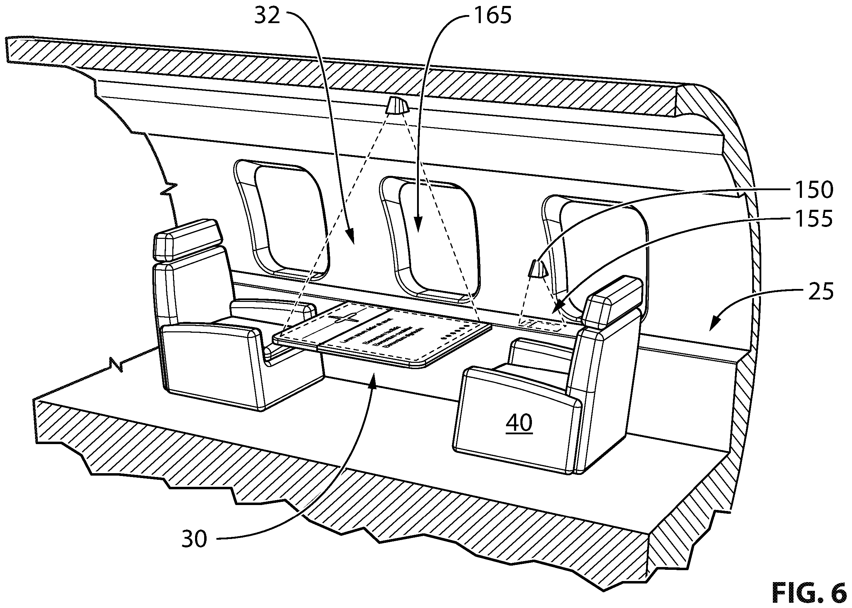

With further reference to Figures 6 to 7, the system 100 further includes a projector 150 for projecting a first passenger interactive display 155 on to the side ledge 25. The projector 150 is a picoprojector, although different types of projectors could be utilized depending on the specific embodiment.

The projector 150 is operatively connected to the controller 120. The first passenger interactive display 155 is specifically an image buttons for controlling at least one of the passenger controllable features described above. It is contemplated that the projected display 155 could additionally or alternatively include sliders and virtual knobs for controlling the passenger controllable features. In some embodiments, the passenger interactive display 155 could be projected onto the table 30, rather than the side ledge 25. In some embodiments, the passenger interactive display 155 could be projected onto either the table 30 or the side ledge 25 depending on input from the passenger. It is further contemplated that the passenger interactive display 155 could be projected onto a different predetermined surface.

The sensor 110 detects passenger interaction with the projected passenger interactive display 155 by sensing positioning, movement, and/or configuration of the passenger hand in relation to the display 155. Specifically, the sensor 110 generates a signal based on the passenger hand either on the side ledge or between the side ledge 25 and the projector 150 to control passenger controllable features (described further below). Depending on the specific embodiment and passenger preferences, the sensor 110 creates the control signal based on the passenger actually touching the side ledge 25 (as if the projected buttons of the display 155 were regular buttons) or by the passenger moving their hands above the display 155.

The system 100 also includes an overhead projector 160 for projecting one or more visual media interfaces 165 onto a top surface of the table 30. The projector 160 is operatively and communicatively connected to the controller 120. As is illustrated in Figures 6 and 7, the interface 165 is used to present an internet browsing experience, but it can equally be used to present a movie, television show, or information related to the flight. In summary, the projected media interface 165 presents information and allows for interaction similar to a touch-screen interface, as is readily recognizable in passenger vehicles. In contrast to those screens, however, the sensor 110 detects passenger interactions with the interface 165, by sensing the position, movement and /or gesture of the passenger's hand, as will be described in more detail below. In some embodiments, it is contemplated that the same projector 160 could provide the visual media 165 as well as the passenger interactive display 155.

As is mentioned briefly above, the table 30 includes a selectively tiltable portion 32. The tiltable portion 32 can be arranged in a horizontal position such that the portion 32 is aligned with the remaining portions of the table 30, as is illustrated in Figure 6. The tiltable portion 32 can also be arranged in a tilted position, as is illustrated in Figure 7, such that the portion 32 is at an angle to the remaining portions of the table 30. It is contemplated that the tiltable portion 32 could make up more or less of the table 30 than illustrated. It is also contemplated that the tiltable portion 32 could have additional positions, or could be selectively positioned at any angle between horizontal and vertical.

According to the present technology, the sensor 110 is further adapted to sense the position of the tiltable portion 32, and the sense when the passenger has re-positioned the tiltable portion 32 by sensing the positioning and/or movement of the tiltable portion 32. Having sensed the position of the tiltable portion 32, the sensor 110 generates a signal indicating the position which is then sent to the projector 160 to adapt the visual media interface 165 such that it is correctly projected onto the table 30 and/or the tiltable portion 32. As can be seen in Figure 7, the visual media interface 165 is resized and adjusted in order to appear correctly sized and in focus on the angled tiltable portion 32.

As is also mentioned above, the table 30 can be stowed away in some embodiments. The sensor 110 is further adapted to sense the overall position of the table 30. When the sensor 110 determines that the table 30 is stowed away, the sensor 110 further generates a signal indicating to the projector 160 to stop projecting the visual media interface 165. It is contemplated that the sensor 110 could generate the signal indicating to the projector 160 to stop projecting the visual media interface 165 in response to hand gestures from the passenger.

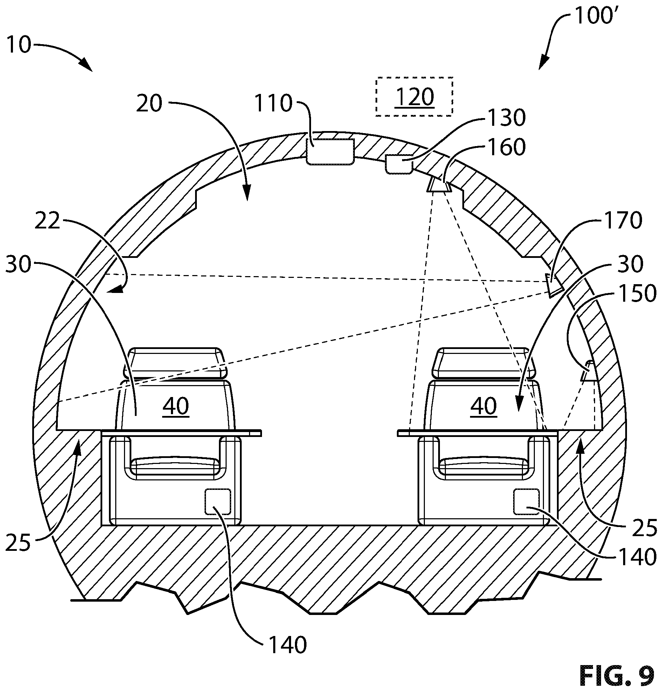

With reference to Figures 8 and 9, another embodiment of a system 100' is illustrated. Elements of the system 100' that are the same as or similar to elements of the system 100 retain their same reference numeral and will not be described again unless necessary. The system 100' retains the controller 120, the gesture sensor 110, and the projectors 150, 160 of the system 100. It is contemplated that some embodiments of the system 100' could include only one of the projectors 150 and 160.

The system 100' includes an additional projector 170, referred to herein as a wall projector 170, communicatively connected to the controller 120. As is illustrated in Figure 8, the wall projector 170, projects another visual media onto the cabin side wall 22 disposed generally opposite its corresponding seat 40. Depending on the indications received from the passenger, as will be discussed in more detail below, the visual media projected onto the side wall 22 could be the same visual media 165 as projected by the projector 160, or could be a different visual media. It is also contemplated that the projector 170 could be differently oriented to project onto a different surface, for example a wall or screen forward of the seat 40, depending on the particular embodiment.

The system 100' also includes a seat sensor 140 communicatively connected to the controller 120. The seat sensor 140 detects a translational position of the seat 40, a recline angle of the seat 40, and/or a presence of the passenger in the seat 40. In some embodiments, the seat sensor 140 could additionally or alternatively sense changes to any or all of the position, angle, or presence of the passenger in the seat 40. The sensor 140 is adapted to generate signals based on the passenger seat information sensed by the sensor 140, such that the controller 120 can control the projectors 150, 160, 170 based on the sensed seat position or passenger presence. For example, upon sensing by the sensor 140 that the passenger seat has rotated away from the side ledge 25, the controller 120 can control the projector 150 to stop projecting the interface 155 onto the side ledge 25 (as it is no longer needed). Similarly, in some embodiments, if the sensor 140 senses that the passenger has left the seat 40, the controller 120 can control all of the projectors 150, 160, 170 to stop projecting any of the projected media.

The system 100' further includes a passenger sensor 130 adapted to determine one or more of a head position of the passenger, a body position of the passenger, and a change in either of the head or body position. Similar to the sensor 110, the sensor 130 includes a camera and image treatment system to determine the head and/or body position, or changes thereto, although a different type of sensor could be employed. In some embodiments, the sensor 130 could further sense eye movement of the passenger, in order to track where the passenger is looking. It is contemplated that the sensor 110 and the sensor 130 could be implemented as one sensor.

As may be apparent, reference to any one sensor or feature herein does not preclude more than one of the enumerated devices being used within the cabin 20 of the aircraft 10. For example, it is contemplated that the sensor 110 will be implemented as a plurality of sensors 110 disposed throughout the cabin 20 of the aircraft 10.

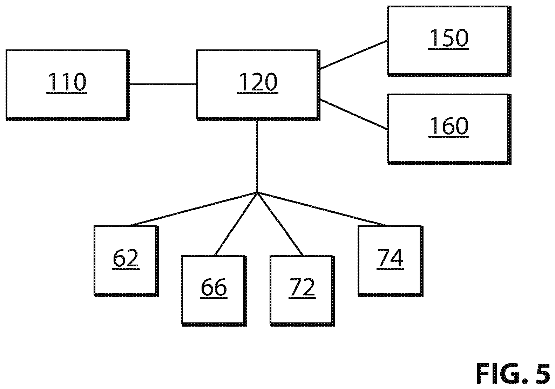

As also may be apparent from the foregoing, reference to communication lines in systems 100, 100' between the elements 62, 66, 72, 74, 110, 130, 140, 150, 160, 170, as is schematically illustrated in Figures 5 and 9, is contemplated to refer to wired and/or wireless communication channels to and from the controller 120. In addition, the communication lines are contemplated to be two-way communication channels. Naturally, multiple one-way communication channels may be employed without departing from the scope of the present technology. In addition, a communication bus or a signal bus may be employed without departing from the scope of the present invention.

Use of the system 100' (and by extension the system 100) will now be explained in more detail by way of the following examples of passenger interaction with the system 100'. It should be noted that these are simply illustrative examples to aid in understanding use of the systems 100, 100' and should not be considered limiting in any way.

As one non-limiting example, the passenger may wish to watch a movie while sitting in the seat 40. The passenger begins by placing their hand on the side ledge 25. The sensor 110 detects the placement of the hand and sends a signal to the projector 150. In response, the projector 150 projects the button display 155. Placement of the button display 155 by the projector 150 is based on the detection by the sensor 110 of the location of the passenger's hand. As such, the position of the button display 155 is tailored to the passenger. In some embodiments, the sensor 110 could sense the position of the passenger's arm in order to determine placement of the button display 155.

The passenger then "pushes" a button on the button display 155 to turn on the visual media on their table 30 by tapping the side ledge 25 where the image of the appropriate button is projected. The sensor 110 senses the selection of the projected button, and generates a signal to the controller 120 indicating the selection. The controller 120 then controls the projector 160 to project the visual media 165 (the movie or a movie selection interface, for example) onto the table 30.

As another example interaction, the passenger now desires to lower the sound volume of the sound system 74, to make the movie quieter. The passenger points their finger toward the speaker 74 and motions downward. The sensor 110 senses the passenger's hand motion and sends a corresponding indication to the controller 120. The controller 120 in turn sends a signal to the speaker 74 to reduce the sound volume. The speaker 74 then reduces its sound volume in response to the signal sent from the controller 120. In another non-limiting example, the passenger could also use the button display 155. In such an embodiment, the passenger could slide their finger along a projected slider in the button display 155 to control the sound volume.

As another example interaction, the passenger could now decide to reduce the light in the cabin 20 in order to better see their movie. The passenger moves their hand in the direction of the window 70 in order to close the window shade 72. The passenger waves their hand in a downward motion and in the direction of the window 70. The sensor 110 senses the passenger's hand motion and sends a corresponding indication to the controller 120. The controller 120 in turn sends a signal to the window shade 72 to lower. The window shade 72 lowers to partially close the window 70 in response to the signal sent from the controller 120.

As another example interaction, the passenger now decides to watch their movie projected onto the side wall 22, instead of on the table 20. The passenger swipes their hand over the table 30 toward the side wall 22. The sensor 110 senses the passenger's hand motion and sends a corresponding indication to the controller 120. The controller 120 in turn sends a signal to the projector 170 to project the movie onto the side wall 22, as well as a signal to the projector 160 to stop projecting the movie onto the table 30. The projectors 160, 170 then operate as instructed in response to the signals sent from the controller 120. In some cases, the controller 120 could further instruct one of the projectors 150, 160 to project the button display 155 onto the table 30, such that it is accessible to the passenger, even if they are turned facing the side wall 22.

Later, the passenger could decide to no longer watch their movie on the side wall 22 and turn back to the table 30 to do other things. In such a case, the seat sensor 140 tracks the position and rotation angle of the seat 40, and sends a signal to the controller 120 that the passenger has turned their seat away from its position when watching the movie on the side wall 22. The controller 120 in turn sends a signal to the projector 160 to project the movie onto the table 30, as well as a signal to the projector 170 to stop projecting the movie onto the side wall 22. The projectors 160, 170 then operate as instructed in response to the signals sent from the controller 120. In some scenarios, the passenger sensor 130 could sense that the passenger has turned away from the side wall 22 and send a similar indication to the controller 120. In some scenarios, the controller 120 could direct the projector 170 to stop projecting the movie onto the side wall 22, but not instruct the projector 160 to project the movie onto the table 30.

In some scenarios, the passenger may decide to watch the movie on the table 30 with the tiltable portion 32 raised, for example to permit the passenger watch the movie while leaning back in their chair 40. The sensor 110 would then sense that the tiltable portion 32 was in the tilted position, and send a corresponding indication to the controller 120. The controller 120 would then control the projector 160 to project an image adapted to project onto the tilted portion 32. In some cases, the passenger could make adjustments to the angle of the tiltable portion 32 and the sensor 110, the controller 120, and the projector 160 could repeat their steps in order to allow the passenger to adjust the angle to get the best viewing position. In some cases, one of the projectors 150, 160 could project the playback controls, similar to the button display, onto the table 30 and/or the side ledge 25 to allow the passenger to control the movie.

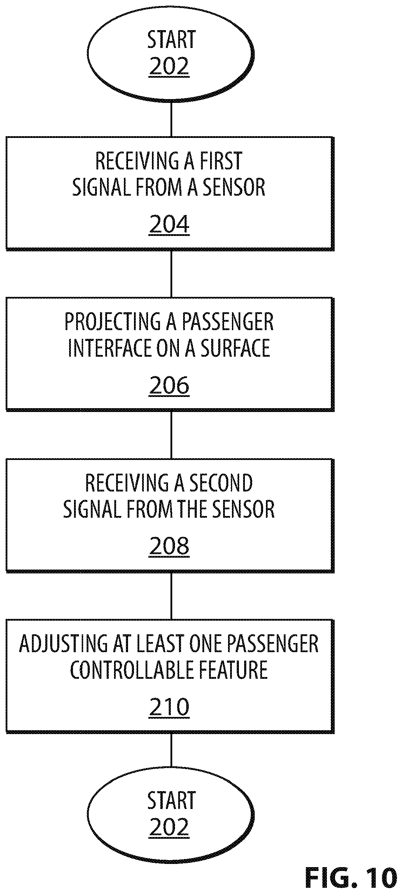

Fig. 10 is a flow chart illustrating one method 200 of operation of embodiments of the systems 100, 100' of the present invention. It is noted that the method 200 is merely exemplary of innumerable variations that may be appreciated by those skilled in the art. The present invention is intended to encompass those variants, as if disclosed herein.

The method 200 for the systems 100, 100' of the present invention contemplates cooperation, *inter alia*, between at least one of the sensors 110, 130, 140 and at least one of the passenger controllable features 62, 66, 72, 74, or at least one of the projectors 150, 160, 170. In one embodiment, the controller 120 is contemplated to receive and coordinate signals from each of the sensors 110, 130, 140 and control the passenger controllable features 62, 66, 72, 74, or the projectors 150, 160, 170 based on the inputs from the sensors 110, 130, 140.

The method 200 starts at 202.

Following the start at 202, the method 200 proceeds to step 204 where the first signal is received by the controller 120 from the sensor 110. As indicated above, the first input signal pertains to at least one of a position, and/or a configuration, and/or a direction of movement of the hand of the passenger. In some implementations, the first input signal could pertain to the position of the passenger's arm, and the passenger's arm and hand.

The method 200 then continues with step 206 where the projector 150 projects the passenger interface 155 onto a predetermined surface, for example the side ledge 25 or the table 30. The location of the passenger interface on the predetermined surface is based on the first signal. In some implementations, the passenger interface 155 is a projected button display 155.

The method 200 continues with step 208 where the controller 120 receives from the sensor 110 a second signal indicative of the position, and/or the configuration, and/or the direction of movement of the hand of the passenger with respect to the passenger interface 155. In some implementations, the signal will be indicative of the position, and/or the configuration, and/or the direction of movement of the hand of the passenger on the predetermined surface. In some implementations, the signal will be indicative of the position, and/or the configuration, and/or the direction of movement of the hand of the passenger in the space between the predetermined surface and the sensor 110.

The method 200 then continues with step 210 where the controller 120 adjusts one or more of the passenger controllable features and/or projection of one or more media displays by the projector 150 based on the signal received at step 208.

From step 210, the method 200 ends at step 212.

As should be apparent from the examples above, the method 200 does not generally fully terminate with step 212. Instead, the method 200 will generally restart from steps 204 and/or 208, depending on passenger interactions with the system 100, 100'.

In some implementations, the method 200 also includes projecting additional media onto another predetermined surface (for example the table 30 or the side wall 22) by another projector (for example the projector 160 or the projector 170). As is described above, the method 200 could further include projecting another visual media onto a third predetermined surface (for example the table 30 or the side wall 22) by another projector (for example the projector 160 or the projector 170). In either case, the method 200 could further include stopping projection of any one of the projectors 150, 160, 170 based on the projection of any one of the other projectors 150, 160, 170.

In some implementations, the method 200 could further include controlling the projectors 150, 160, 170 based on signals generated in response to the sensors 130, 140. In some such implementations, the method 200 could further include receiving, by the controller 120 from the seat sensor 140, another signal indicative of at least one of a translational position, and/or a recline angle, and/or a presence of the passenger in the seat 40. The method 200 would then continue with adjusting projection at least one of the projectors 150, 160, 170 based on the signal from the seat sensor 140. In some other such implementations, the method 200 could further include receiving, by the controller 120 from the passenger sensor 130, another signal indicative of at least one of a position of the head and/or the position of the body of the passenger, and/or a change in position of the head and/or the body of the passenger. The method 200 would then continue with adjusting projection of at least one of the projectors 150, 160, 170 based the signal from the passenger sensor 130.

In some such implementations, the method 200 further includes the sensor 110 detecting that the table 30 is in the stored position and then the controller 120 sending to the projector 160 a signal to stop projecting the media display 165.

In some other implementations, the method 200 further includes the sensor 110 detecting that the tiltable portion 32 of the table 30 is in the tilted position and then adjusting the projection of the visual media 165 to project the visual media 165 onto the tilted portion 32.

The method 200 may also be operational in a cyclic manner (*i.e.*, 1 cycle per second or minute, etc.). As such, the method 200 is contemplated to be restarted from step 204 or step 208 repetitively. This assures that any passenger interactions, intended by the passenger to control different aspects of the cabin features and the projectors 150, 160, 170, are regularly detected in order respond to the passenger's interactions. Any cycle time may be selected for operation of the method 200, as required or as desired. The predetermined time interval of this cycle may be measured in millisecond, seconds, minutes, etc., as required or as desired.

The specification is not intended to limit the aspects of implementations and embodiments of the present technology as recited in the claims below. Modifications and improvements to the above-described implementations and embodiments of the present technology may become apparent to those skilled in the art. The foregoing description is intended to be exemplary rather than limiting.

## Claims

1. An aircraft comprising:
a passenger cabin with a plurality of seats;
a ledge extending along a cabin sidewall disposed next to one side of said seats;
a table top associated with at least one of said seats; and
a system (100) for providing a passenger interface for a passenger in a seat (40), the system (100) comprising:
at least one sensor (110) adapted to sense at least one of: a position of at least one hand of the passenger, and/or a configuration of the at least one hand of the passenger, and/or a direction of movement of the at least one hand of the passenger,
the at least one sensor (110) being adapted to generate a signal representative of the at least one of the position of the at least one hand of the passenger and/or the configuration of the at least one hand of the passenger and/or the direction of movement of the at least one hand of the passenger;
a controller (120) communicatively connected to the at least one sensor (110) for receiving at least the signal therefrom,
the controller (120) being communicatively connected to at least one passenger controllable feature, the controller (120) being adapted to control the at least one passenger controllable feature based on the signal representative of the at least one of the position of the at least one hand of the passenger and/or the configuration of the at least one hand of the passenger and/or the direction of movement of the at least one hand of the passenger; and
a projector (150) communicatively connected to the controller (120),
the projector (150) being adapted to project a passenger interface onto a predetermined surface, placement of the projected passenger interface being determined by the controller (120) based at least on the signal representative of the at least one of the position of the at least one hand of the passenger and/or the configuration of the at least one hand of the passenger and/or the direction of movement of the at least one hand of the passenger,
wherein
the projector (150) is a first projector;
the predetermined surface is a first predetermined surface; and
the system (100) further comprises:
a second projector (160) communicatively connected to the controller (120),
the second projector being adapted for projecting at least one media display onto a second predetermined surface,
the first predetermined surface is the ledge generally adjacent to the seats (40); and the second predetermined surface is the table top; wherein at least a portion of the second predetermined surface is selectively moveable between at least a horizontal position and a tilted position; and
the second projector is adapted to project the at least one media display onto the portion when the portion is arranged in the horizontal position and when the portion is arranged in the tilted position; and
the at least one sensor is further adapted to sense a position of the second predetermined surface, and upon sensing the position of the second predetermined surface, the sensor (110) generates a signal indicative of the position which is then sent to the second projector (160) to adapt the at least one media display such that the at least one media display is correctly projected onto the second predetermined surface.

2. The system (100) of claim 1, wherein the at least one sensor (110) and/or the controller (120) are adapted to determine an intended interaction with the passenger interface by the passenger based on a placement of the at least one hand of the passenger on the predetermined surface.

3. The system (100) of claim 1, wherein the at least one sensor (110) is adapted to determine an intended interaction with the passenger interface by the passenger based on movement of the at least one hand of the passenger between the projector (150) and the predetermined surface.

4. The system (100) of claim 1, wherein the at least one passenger controllable feature includes at least one of:
an overhead light; and/or
an air supply; and/or
a sound system with controllable volume; and/or
a window shade system for selectively closing and opening a window shade.

5. The system (100) of claim 1, wherein:
the second predetermined surface is selectively moveable between at least a deployed position and a stored position,
the second projector being adapted to project the at least one media display onto the second predetermined surface only when the second predetermined surface is arranged in the deployed position.

6. The system (100) of claim 1, further comprising:
a third projector for projecting a visual media onto a wall surface disposed generally opposite the seat (40), the third projector being communicatively connected to the controller (120).

7. The system (100) of claim 6, wherein the visual media is at least a portion of the at least one media display projected by the second projector.

8. The system (100) of claim 6, further comprising at least one seat sensor (140) communicative connected to the controller (120), the at least one seat sensor (140) being adapted for determining at least one of:
a translational position of the seat (40);
a recline angle of the seat (40); and
a presence of the passenger in the seat (40).

9. The system (100) of claim 6, further comprising at least one passenger sensor communicatively connected to the controller (120), the passenger sensor being adapted to determine at least one of:
a position of a head of the passenger; and/or
a position of a body of the passenger; and/or
a change in position of at least one of the head of the passenger and the body of the passenger.

10. The system (100) of claim 1, wherein the passenger interface projects buttons for controlling at least one of:
a passenger controllable feature; and/or
an additional projector for projecting at least one media display onto a surface near the seat (40).

11. A method for providing a passenger interface to a passenger in a seat (40), in an aircraft, the aircraft comprising:
a passenger cabin with a plurality of seats;
a ledge extending along a cabin sidewall disposed next to one side of said seats;
a table top associated with at least one of said seats, the method
comprising:
receiving, by a controller (120) from at least one sensor (110), a first signal indicative of at least one of:
a position of the hand of the passenger, and/or
a position of an arm of the passenger;
projecting, by a projector, a passenger interface onto a predetermined surface, a location of the passenger interface on the predetermined surface being based on the first signal;
receiving, by the controller (120) from the at least one sensor (110), a second signal indicative of at least one of a position of the hand of the passenger with respect to the passenger interface and/or a configuration of the hand of the passenger with respect to the passenger interface, and/or a direction of movement of the hand of the passenger with respect to the passenger interface; and
adjusting, by the controller (120), based on the second signal, at least one of:
a passenger controllable feature, and/or
projection of at least one media display by a second projector communicatively connected to the controller (120),
wherein the predetermined surface is a first predetermined surface, the second projector being adapted for projecting at least one media display onto a second predetermined surface,
the first predetermined surface being the ledge generally adjacent to the seats (40); and
the second predetermined surface being the table top; wherein at least a portion of the second predetermined surface is selectively moveable between at least a horizontal position and a tilted position; and
the second projector is adapted to project the at least one media display onto the portion when the portion is arranged in the horizontal position and when the portion is arranged in the tilted position; and
the at least one sensor is further adapted to sense a position of the second predetermined surface, and upon sensing the position of the second predetermined surface, the sensor (110) generates a signal indicative of the position which is then sent to the second projector (160) to adapt the at least one media display such that the at least one media display is correctly projected onto the second predetermined surface.

## Patentansprüche

1. Luftfahrzeug, umfassend:
eine Fahrgastkabine mit einer Vielzahl von Sitzen;
eine Leiste, die sich entlang einer Kabinenseitenwand erstreckt, die neben einer Seite der Sitze angeordnet ist;
eine Tischplatte, die zumindest einem der Sitze zugeordnet ist; und
ein System (100) zum Bereitstellen einer Fahrgastschnittstelle für einen Fahrgast auf einem Sitz (40), wobei das System (100) Folgendes umfasst:
zumindest einen Sensor (110), der ausgelegt ist, um zumindest eines von Folgendem zu erfassen: einer Position von zumindest einer Hand des Fahrgastes und/oder einer Konfiguration der zumindest einen Hand des Fahrgastes und/oder einer Bewegungsrichtung der zumindest einen Hand des Fahrgastes,
wobei der zumindest eine Sensor (110) ausgelegt ist, um ein Signal zu erzeugen, das repräsentativ für das zumindest eine von der Position der zumindest einen Hand des Fahrgastes und/oder der Konfiguration der zumindest einen Hand des Fahrgastes und/oder der Bewegungsrichtung der zumindest einen Hand des Fahrgastes ist;
eine Steuerung (120), die kommunikativ mit dem zumindest einen Sensor (110) verbunden ist, um zumindest das Signal davon zu empfangen,
wobei die Steuerung (120) kommunikativ mit zumindest einem von einem Fahrgast steuerbaren Merkmal verbunden ist, wobei die Steuerung (120) ausgelegt ist, um das zumindest eine von einem Fahrgast steuerbare Merkmal basierend auf dem Signal zu steuern, das repräsentativ für das zumindest eine von der Position der zumindest einen Hand des Fahrgastes und/oder der Konfiguration der zumindest einen Hand des Fahrgastes und/oder der Bewegungsrichtung der zumindest einen Hand des Fahrgastes ist; und
einen Projektor (150), der kommunikativ mit der Steuerung (120) verbunden ist,
wobei der Projektor (150) ausgelegt ist, um eine Fahrgastschnittstelle auf eine vorbestimmte Oberfläche zu projizieren, wobei Platzierung der projizierten Fahrgastschnittstelle durch die Steuerung (120) basierend zumindest auf dem Signal bestimmt wird, das repräsentativ für das zumindest eine von der Position der zumindest einen Hand des Fahrgastes und/oder der Konfiguration der zumindest einen Hand des Fahrgastes und/oder der Bewegungsrichtung der zumindest einen Hand des Fahrgastes ist,
wobei
der Projektor (150) ein erster Projektor ist;
die vorbestimmte Oberfläche eine erste vorbestimmte Oberfläche ist; und
das System (100) ferner Folgendes umfasst:
einen zweiten Projektor (160), der kommunikativ mit der Steuerung (120) verbunden ist,
wobei der zweite Projektor ausgelegt ist, um zumindest eine Medienanzeige auf eine zweite vorbestimmte Oberfläche zu projizieren,
wobei die erste vorbestimmte Oberfläche die Leiste ist, die im Allgemeinen benachbart zu den Sitzen (40) ist; und die zweite vorbestimmte Oberfläche die Tischplatte ist; wobei zumindest ein Teil der zweiten vorbestimmten Oberfläche selektiv zwischen zumindest einer horizontalen Position und einer geneigten Position bewegbar ist; und
der zweite Projektor ausgelegt ist, um die zumindest eine Medienanzeige auf den Teil zu projizieren, wenn der Teil in der horizontalen Position angeordnet ist und wenn der Teil in der geneigten Position angeordnet ist; und
der zumindest eine Sensor ferner ausgelegt ist, um eine Position der zweiten vorbestimmten Oberfläche zu erfassen, und beim Erfassen der Position der zweiten vorbestimmten Oberfläche der Sensor (110) ein Signal erzeugt, das die Position angibt, das dann an den zweiten Projektor (160) gesendet wird, um die zumindest eine Medienanzeige anzupassen, sodass die zumindest eine Medienanzeige korrekt auf die zweite vorbestimmten Oberfläche projiziert wird.

2. System (100) nach Anspruch 1, wobei der zumindest eine Sensor (110) und/oder die Steuerung (120) ausgelegt sind, um eine beabsichtigte Interaktion mit der Fahrgastschnittstelle durch den Fahrgast basierend auf einer Platzierung der zumindest einen Hand des Fahrgastes auf der vorbestimmten Oberfläche zu bestimmen.

3. System (100) nach Anspruch 1, wobei der zumindest eine Sensor (110) ausgelegt ist, um eine beabsichtigte Interaktion mit der Fahrgastschnittstelle durch den Fahrgast basierend auf Bewegung der zumindest einen Hand des Fahrgastes zwischen dem Projektor (150) und der vorbestimmten Oberfläche zu bestimmen.

4. System (100) nach Anspruch 1, wobei das zumindest eine von einem Fahrgast steuerbare Merkmal zumindest eines von Folgendem beinhaltet:
ein Deckenlicht; und/oder
eine Luftzufuhr; und/oder
ein Soundsystem mit steuerbarer Lautstärke; und/oder
ein Fensterrollosystem zum selektiven Schließen und Öffnen eines Fensterrollos.

5. System (100) nach Anspruch 1, wobei:
die zweite vorbestimmte Oberfläche selektiv zwischen zumindest einer ausgefahrenen Position und einer Lagerposition bewegbar ist,
wobei der zweite Projektor ausgelegt ist, um die zumindest eine Medienanzeige nur dann auf die zweite vorbestimmte Oberfläche zu projizieren, wenn die zweite vorbestimmte Oberfläche in der ausgefahrenen Position angeordnet ist.

6. System (100) nach Anspruch 1, ferner umfassend:
einen dritten Projektor zum Projizieren eines visuellen Mediums auf eine Wandoberfläche, die im Allgemeinen gegenüber dem Sitz (40) angeordnet ist, wobei der dritte Projektor kommunikativ mit der Steuerung (120) verbunden ist.

7. System (100) nach Anspruch 6, wobei das visuelle Medium zumindest ein Teil der zumindest einen Medienanzeige ist, die durch den zweiten Projektor projiziert wird.

8. System (100) nach Anspruch 6, ferner umfassend zumindest einen Sitzsensor (140), der kommunikativ mit der Steuerung (120) verbunden ist, wobei der zumindest eine Sitzsensor (140) ausgelegt ist, um zumindest eines von Folgendem zu bestimmen:
einer translatorischen Position des Sitzes (40);
einem Neigungswinkel des Sitzes (40); und
einer Anwesenheit des Fahrgastes auf dem Sitz (40).

9. System (100) nach Anspruch 6, ferner umfassend zumindest einen Fahrgastsensor, der kommunikativ mit der Steuerung (120) verbunden ist, wobei der Fahrgastsensor ausgelegt ist, um zumindest eines von Folgendem zu bestimmen:
einer Position eines Kopfes des Fahrgastes; und/oder
einer Position eines Körpers des Fahrgastes; und/oder
einer Positionsänderung von zumindest einem von dem Kopf des Fahrgastes und dem Körper des Fahrgastes.

10. System (100) nach Anspruch 1, wobei die Fahrgastschnittstelle Tasten zum Steuern von zumindest einem von Folgendem projiziert:
einem von einem Fahrgast steuerbaren Merkmal; und/oder
einem zusätzlichen Projektor zum Projizieren von zumindest einer Medienanzeige auf eine Oberfläche nahe dem Sitz (40).

11. Verfahren zum Bereitstellen einer Fahrgastschnittstelle für einen Fahrgast auf einem Sitz (40) in einem Luftfahrzeug, wobei das Luftfahrzeug Folgendes umfasst:
eine Fahrgastkabine mit einer Vielzahl von Sitzen;
eine Leiste, die sich entlang einer Kabinenseitenwand erstreckt, die neben einer Seite der Sitze angeordnet ist;
eine Tischplatte, die zumindest einem der Sitze zugeordnet ist, wobei das Verfahren Folgendes umfasst:
Empfangen, durch eine Steuerung (120) von zumindest einem Sensor (110), eines ersten Signals, das zumindest eines von Folgendem angibt:
einer Position der Hand des Fahrgastes, und/oder
einer Position eines Arms des Fahrgastes;
Projizieren, durch einen Projektor, einer Fahrgastschnittstelle auf eine vorbestimmte Oberfläche, wobei ein Ort der Fahrgastschnittstelle auf der vorbestimmten Oberfläche auf dem ersten Signal basiert;
Empfangen, durch die Steuerung (120) von dem zumindest einen Sensor (110), eines zweiten Signals, das zumindest eines von einer Position der Hand des Fahrgastes in Bezug auf die Fahrgastschnittstelle und/oder einer Konfiguration der Hand des Fahrgastes in Bezug auf die Fahrgastschnittstelle und/oder einer Bewegungsrichtung der Hand des Fahrgastes in Bezug auf die Fahrgastschnittstelle angibt; und
Anpassen, durch die Steuerung (120), basierend auf dem zweiten Signal, von zumindest einem von Folgendem:
einem von einem Fahrgast steuerbaren Merkmal, und/oder
Projektion von zumindest einer Medienanzeige durch einen zweiten Projektor, der kommunikativ mit der Steuerung (120) verbunden ist,
wobei
die vorbestimmte Oberfläche eine erste vorbestimmte Oberfläche ist, der zweite Projektor ausgelegt ist, um zumindest eine Medienanzeige auf eine zweite vorbestimmte Oberfläche zu projizieren,
die erste vorbestimmte Oberfläche die Leiste ist, die im Allgemeinen benachbart zu den Sitzen (40) ist; und
die zweite vorbestimmte Oberfläche die Tischplatte ist; wobei zumindest ein Teil der zweiten vorbestimmten Oberfläche selektiv zwischen zumindest einer horizontalen Position und einer geneigten Position bewegbar ist; und
der zweite Projektor ausgelegt ist, um die zumindest eine Medienanzeige auf den Teil zu projizieren, wenn der Teil in der horizontalen Position angeordnet ist und wenn der Teil in der geneigten Position angeordnet ist; und
der zumindest eine Sensor ferner ausgelegt ist, um eine Position der zweiten vorbestimmten Oberfläche zu erfassen, und beim Erfassen der Position der zweiten vorbestimmten Oberfläche der Sensor (110) ein Signal erzeugt, das die Position angibt, das dann an den zweiten Projektor (160) gesendet wird, um die zumindest eine Medienanzeige anzupassen, sodass die zumindest eine Medienanzeige korrekt auf die zweite vorbestimmten Oberfläche projiziert wird.

## Revendications

1. Aéronef comprenant :
une cabine passagers avec une pluralité de sièges ;
un rebord s'étendant le long d'une paroi latérale de cabine disposée à proximité d'un côté desdits sièges ;
un plateau de table associé à au moins un desdits sièges ; et
un système (100) pour fournir une interface de passager pour un passager dans un siège (40), le système (100) comprenant :
au moins un capteur (110) adapté pour détecter au moins l'une de : une position d'au moins une main du passager, et/ou une configuration de l'au moins une main du passager, et/ou une direction de déplacement de l'au moins une main du passager,
l'au moins un capteur (110) étant adapté pour générer un signal représentatif de l'au moins une de la position de l'au moins une main du passager et/ou la configuration de l'au moins une main du passager et/ou la direction de déplacement de l'au moins une main du passager ;
un contrôleur (120) connecté en communication à l'au moins un capteur (110) pour recevoir au moins le signal provenant de celui-ci,
le contrôleur (120) étant connecté en communication à au moins un élément pouvant être commandé par un passager, le contrôleur (120) étant adapté pour commander l'au moins un élément pouvant être commandé par un passager sur la base du signal représentatif de l'au moins une de la position de l'au moins une main du passager et/ou la configuration de l'au moins une main du passager et/ou la direction de déplacement de l'au moins une main du passager ; et
un projecteur (150) connecté en communication au contrôleur (120),
le projecteur (150) étant adapté pour projeter une interface de passager sur une surface prédéterminée, le placement de l'interface de passager projetée étant déterminé par le contrôleur (120) sur la base au moins du signal représentatif de l'au moins une de la position de l'au moins une main du passager et/ou la configuration de l'au moins une main du passager et/ou la direction de déplacement de l'au moins une main du passager,
dans lequel
le projecteur (150) est un premier projecteur ;
la surface prédéterminée est une première surface prédéterminée ; et
le système (100) comprend en outre :
un second projecteur (160) connecté en communication au contrôleur (120),
le deuxième projecteur étant adapté pour projeter au moins un affichage de contenu multimédia sur une seconde surface prédéterminée,
la première surface prédéterminée est le rebord globalement adjacent aux sièges (40) ; et la seconde surface prédéterminée est le plateau de table ; dans lequel au moins une partie de la seconde surface prédéterminée est sélectivement mobile entre au moins une position horizontale et une position inclinée ; et
le deuxième projecteur est adapté pour projeter l'au moins un affichage de contenu multimédia sur la partie lorsque la partie est agencée en position horizontale et lorsque la partie est agencée en position inclinée ; et
l'au moins un capteur est en outre adapté pour détecter une position de la seconde surface prédéterminée, et lors de la détection de la position de la seconde surface prédéterminée, le capteur (110) génère un signal indicatif de la position qui est ensuite envoyé au second projecteur (160) pour adapter l'au moins un affichage de contenu multimédia de telle sorte que l'au moins un affichage de contenu multimédia soit correctement projeté sur la seconde surface prédéterminée.

2. Système (100) selon la revendication 1, dans lequel l'au moins un capteur (110) et/ou le contrôleur (120) sont adaptés pour déterminer une interaction prévue avec l'interface de passager par le passager sur la base d'un placement de l'au moins une main du passager sur la surface prédéterminée.

3. Système (100) selon la revendication 1, dans lequel l'au moins un capteur (110) est adapté pour déterminer une interaction prévue avec l'interface de passager par le passager sur la base du déplacement de l'au moins une main du passager entre le projecteur (150) et la surface prédéterminée.

4. Système (100) selon la revendication 1, dans lequel l'au moins un élément pouvant être commandé par le passager comprend au moins l'un parmi :
un plafonnier ; et/ou
une alimentation en air ; et/ou
un système audio avec volume pouvant être commandé ; et/ou
un système de store de fenêtre permettant de fermer et d'ouvrir sélectivement un store de fenêtre.

5. Système (100) selon la revendication 1, dans lequel :
la seconde surface prédéterminée est sélectivement mobile entre au moins une position déployée et une position rentrée,
le deuxième projecteur étant adapté pour projeter l'au moins un affichage de contenu multimédia sur la seconde surface prédéterminée uniquement lorsque la seconde surface prédéterminée est disposée dans la position déployée.

6. Système (100) selon la revendication 1, comprenant en outre :
un troisième projecteur pour projeter un contenu multimédia visuel sur une surface murale disposée globalement face au siège (40), le troisième projecteur étant connecté en communication au contrôleur (120).

7. Système (100) selon la revendication 6, dans lequel le contenu multimédia visuel est au moins une partie de l'au moins un affichage de contenu multimédia projeté par le deuxième projecteur.

8. Système (100) selon la revendication 6, comprenant en outre au moins un capteur de siège (140) connecté en communication au contrôleur (120), l'au moins un capteur de siège (140) étant adapté pour déterminer au moins l'un parmi :
une position de translation du siège (40) ;
un angle d'inclinaison du siège (40) ; et
une présence du passager dans le siège (40).

9. Système (100) selon la revendication 6, comprenant en outre au moins un capteur de passager connecté en communication au contrôleur (120), le capteur de passager étant adapté pour déterminer au moins l'un de :
une position de la tête du passager; et/ou
une position du corps du passager ; et/ou
un changement de position d'au moins l'un de la tête du passager et du corps du passager.

10. Système (100) selon la revendication 1, dans lequel l'interface de passager projette des boutons pour commander au moins l'un de :
un élément pouvant être commandé par le passager ; et/ou
un projecteur supplémentaire pour projeter au moins un affichage de contenu multimédia sur une surface proche du siège (40).

11. Procédé pour fournir une interface de passager à un passager dans un siège (40), dans un aéronef, l'aéronef comprenant :
une cabine passagers avec une pluralité de sièges ;
un rebord s'étendant le long d'une paroi latérale de cabine disposée à proximité d'un côté desdits sièges ;
un plateau de table associé à au moins un desdits sièges, le procédé comprenant :
la réception, par un contrôleur (120) en provenance d'au moins un capteur (110), d'un premier signal indicatif d'au moins l'un de :
une position de la main du passager, et/ou
une position du bras du passager ;
la projection, par un projecteur, d'une interface de passager sur une surface prédéterminée, un emplacement de l'interface de passager sur la surface prédéterminée étant basé sur le premier signal ;
la réception, par le contrôleur (120) en provenance dudit au moins un capteur (110), d'un deuxième signal indicatif d'au moins une d'une position de la main du passager par rapport à l'interface de passager et/ou une configuration de la main du passager par rapport à l'interface passager, et/ou une direction de déplacement de la main du passager par rapport à l'interface de passager ; et
l'ajustement, par le contrôleur (120), sur la base du deuxième signal, d'au moins l'un parmi :
un élément pouvant être commandé par le passager, et/ou
la projection d'au moins un affichage de contenu multimédia par un deuxième projecteur connecté en communication au contrôleur (120),
dans lequel la surface prédéterminée est une première surface prédéterminée, le deuxième projecteur étant adapté pour projeter au moins un affichage de contenu multimédia sur une seconde surface prédéterminée,
la première surface prédéterminée étant le rebord globalement adjacent aux sièges (40) ; et la seconde surface prédéterminée étant le plateau de table ; dans lequel au moins une partie de la seconde surface prédéterminée est sélectivement mobile entre au moins une position horizontale et une position inclinée ; et
le deuxième projecteur est adapté pour projeter l'au moins un affichage de contenu multimédia sur la partie lorsque la partie est agencée en position horizontale et lorsque la partie est agencée en position inclinée ; et
l'au moins un capteur est en outre adapté pour détecter une position de la seconde surface prédéterminée, et lors de la détection de la position de la seconde surface prédéterminée, le capteur (110) génère un signal indicatif de la position qui est ensuite envoyé au second projecteur (160) pour adapter l'au moins un affichage de contenu multimédia de telle sorte que l'au moins un affichage de contenu multimédia soit correctement projeté sur la seconde surface prédéterminée.
